# EUROPEAN PATENT APPLICATION

(11) **EP 2 495 904 A1**
(43) Date of publication of application: **05.09.2012**
(21) Application number: 11305226.0
(22) Date of filing: 03.03.2011
(51) Int. Cl.: H04J 14/08

(54) **Method and related apparatus for efficient optical data transmission**

(71) Applicant: Alcatel Lucent, 75007 Paris (FR)
(72) Inventor: Meyer, Gerhard, 91330, Eggolsheim (DE)
(74) Representative: Urlichs, Stefan

(57) **Abstract**

In order to improve the efficiency of optical data transmission between network interfaces (NIC1-NIC6) over a shared transmission medium (OR), one or more traffic channels (λt) and at least one control channel (λc) are provided. All network interfaces (NIC1-NIC6) will be synchronized to an absolute time reference (PTR1, PTR2). Data to be transmitted are assembled in the network interfaces into chunks. These chunks are scheduled for transmission by determining the availability of a selected one of said traffic channels at a scheduled transmit time. The scheduled transmit time and the selected traffic channel are announced to the other network interfaces via the control channel. At the scheduled transmit time, the scheduled chunk is transmitted over the shared transmission medium on the selected traffic channel.

## Description

### Field of the Invention

The present invention relates to the field of telecommunications and more particularly to a method and related apparatus for efficient optical data transmission between multiple network nodes.

### Background of the Invention

Today, optical networks are widely employed for high speed data transmission. In metro (MAN) and wide-area (WAN) networks, multiplexing techniques such as time-division multiplexing (TDM) or wavelength-division multiplexing (WDM) are used to simultaneously transmit data from different networks nodes. Typically, each network node is semi-permanently assigned a fixed transmission capacity, e.g. a certain timeslot or a particular wavelength. Given that the amount of data each node is sending is not constant and that not all nodes may be communicating at a certain time, such multiplexing schemes with semi-permanent bandwidth assignment are not efficient or require an over-dimensioning of the network.

In LAN applications, Ethernet technology uses carrier sense and collision detection to transmit data between different nodes sharing the same transmission medium. Collision detection or avoidance strategies can however not be applied to larger scale networks, such as MAN, WAN or optical access networks because of the large delay for optical fiber transmission, which is in the range of 5 *µ*sec per km fiber length.

### Summary of the Invention

A need exists therefore for a more efficient method and related network interfaces for transmitting data traffic over shared transmission media, in particular when traffic relations between the network nodes are nondeterministic and/or unpredictable.

These and other objects that appear below are achieved by a method and related network interface which transmit data over one or more traffic channels and at least one control channel on a shared transmission medium. All network interfaces will be synchronized to an absolute time reference. Data to be transmitted are assembled in the network interfaces into chunks. These chunks are scheduled for transmission by determining the availability of a selected one of said traffic channels at a scheduled transmit time. The scheduled transmit time and the selected traffic channel are announced to the other network interfaces via the control channel. At the scheduled transmit time, the scheduled chunk is transmitted over the shared transmission medium on the selected traffic channel.

This invention can be applied WAN, MAN, Packet-OADM as well as xPON access architectures and will optimize the statistical multiplexing gain and reduce the cost of infrastructure significantly.

### Brief Description of the Drawings

Preferred embodiments of the present invention will now be described with reference to the accompanying drawings in which
- figure 1: shows an optical ring network;
- figure 2: shows a network interface of a network node used in the ring network of figure 1;
- figure 3: a first embodiment of the optical coupling between network interface and ring network; and
- figure 4: a second embodiment of the optical coupling between network interface and ring network.

### Detailed Description of the Invention

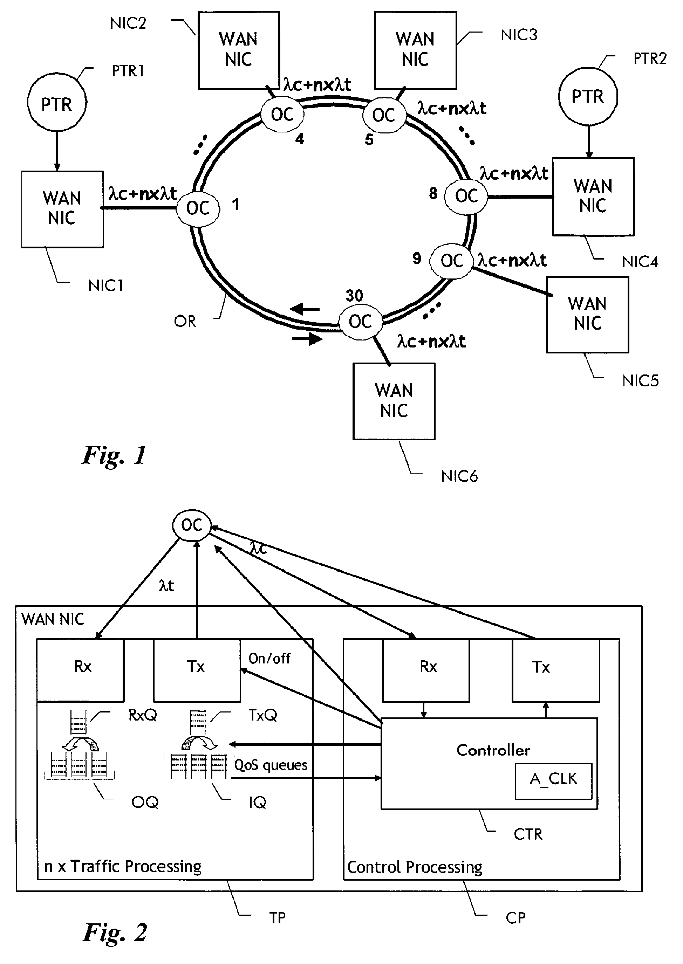

An embodiment of an optical network is shown schematically in figure 1. It contains a two-fiber optical ring OR, to which a number of network interfaces NIC1-NIC6 are connected through optical couplings OC. Network interfaces NIC1 and NIC4 are connected to a precision time reference PTR1, PTR2, respectively. The optical ring network is operated using wavelength-division multiplexing with n traffic wavelengths λt and one additional control wavelength λc. Each network interface has access to each traffic wavelength λt as well as to the control wavelength λc.

The network interfaces NIC1-NIC6 shown in figure 1 are the network side interfaces of corresponding network nodes (not shown for the sake of lucidity) and control the access to the shared transmission medium, i.e. to optical ring OR.

The underlying principle of the transmission of traffic signals is the combination of a precision absolute time reference and a control channel to negotiate or communicate the instants in time each node intends to send data chunks. Via the control channel, each node will know when any other node uses the optical ring at any wavelength and when which wavelength channel on the ring will be available.

In the embodiment, the control channel is operated in a token manner. In particular, a token is handed round in the ring from one node to the next. Whenever a node receives the token, it can send a message on the control channel containing information about when this node intends to send a data chunk on a particular available traffic channel λt along the ring. All nodes monitor the control channel to learn at which instants in time which traffic channel λt will be occupied by other nodes sending their chunks.

The addressing of each chunk can be announced on the control channel as well, or can be part of the chunk. It is also possible that the packets assembled in the chunks carry individual address that are evaluated at each receiving node.

The control channel can further be used to distribute and synchronize the reference time of all participating network nodes. Distribution and synchronization of the reference time can for instance make use of the IEEE 1588 protocol. Alternatively, the reference time can be applied in any other way to all nodes, for example using GPS signals as time reference source.

The traffic channels λt can be operated at a very high speed, for instance 10 or even 100Gb/s, while the control channel λc can be operated at a much lower speed, such as only 100 Mb/s.

Each network node along the ring has an identifier which is unique within the network. The identifiers can be either assigned or auto-discovered. The fiber delay between each node and the total fiber delay will be known to each node. The delay values can for instance be auto-discovered via the control channel λc. When a node interface A announces a data transmission to a node interface B, the announced transmission time must be further in the future than the fiber delay between the two.

An example of a network interface NIC is shown in figure 2. Network interface NIC contains n traffic processing blocks TP for the n traffic wavelengths λt and a control processing block CP for the control wavelength λc. Each traffic processing block TP and the control processing block CP have an optical receiver Rx and an optical transmitter Tx, respectively adapted for the individual wavelengths.

Traffic processing block TP has a number of input queues IQ for traffic signals of different quality of service (QoS) or priority, which feed to a common transmit queue TxQ. Transmit queue TxQ assembles packets into data chunks for transmission along the ring. In receive direction, received data chunks are stored in a receive queue RxQ, which feeds to a number of output queues OQ.

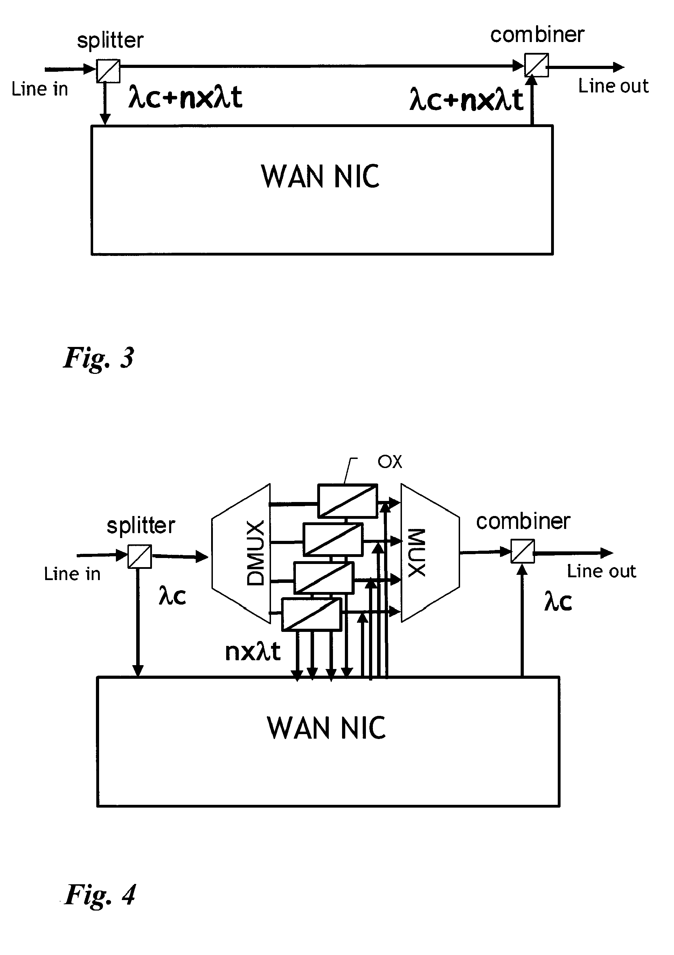

Control block CP has a controller CTR, which reads and generates control signals on the control channel λc. Controller CTR controls the input queues IQ and the transmit queue TxQ to assemble and schedule data chunks for transmission. Controller CTR is further connected to transmitter Tx of control block CP to enable and disable the transmitter Tx. In the embodiment that will be explained with reference to figure 4, controller CTR is also connected to optical coupling OC. In order to schedule and announce transmit times for data chunks, controller CTR has an absolute time clock A_CLK, which it synchronizes to an external absolute timing reference source and/or to the local absolute timing clocks of all other network interfaces on the ring.

The operation of the network interface NIC is as follows. The control processing block CP receives and transmits control signals on the control channel λc. Control signals are transmitted in a token manner and distribute the absolute time at which the node plans to send and chunk size the node will send. The announced transmit time will have a time in advance greater than the maximum fiber delay plus the processing time of the control signal.

When the filing level of transmit queue TxQ reaches a certain threshold, controller CTR will schedule a data chunk for transmission, select a traffic wavelength at an absolute time when this wavelength is still idle, and announce wavelength, absolute time, and chunk size over the control channel λc when the token visits the interface next time.

All other nodes listen on the control channel λc and capture the announced channel usage time in a "channel usage table". The announcing network node will then send its traffic chunk exactly at the point in time it was announced. Meanwhile the next node has received the token, calculates its absolute time and chunk size, and sends out this information on the control channel λc. Then the next node announces its transmit time and chunk size and so on.

All nodes and therefore all control signal receivers are monitoring the "channel usage time" announcements and maintain a channel usage table. Moreover the network interfaces exchange an absolute timing protocol to synchronize their local absolute timing clocks as well as other control and maintenance information.

Traffic processing block TP receives and transmits all traffic signals in chunks or bursts. Transmitter Tx is switched on to transmit its chunk of packets at the previously announced time as controlled by controller CTR. A chunk can be an individual packet or more likely an assembly of packets collected in the transmit queue TxQ. Packets can be IP, Ethernet, MPLS, ATM cells, or any other kind of datagrams. Typical QoS and fairness strategies can be applied by appropriately controlling the input queues IQ in front of the chunk assembler. QoS and fairness strategies are commonly known as such to those skilled in the art and can be implemented depending on the needs of a particular application.

Figures 3 and 4 show two different embodiments for the optical coupling OC. In a drop and continue architecture as shown in figure 3, the traffic receiver Rx will receive all chunks but will discard packets which are not addressed for him. This is very simple to implement with an optical splitter and an optical combiner as shown in figure 3. In a ring architecture, one node will block all through traffic as long as there is no failure to avoid traffic chunks from looping around the ring.

Figure 4 shows a switched OC structure. The received WDM signal is demultiplexed into the individual traffic channels λt. Each traffic channel λt is connected to a separate optical switch OX. The optical switches OX are controlled by the control processing unit CTR to either drop a chunk or pass it through. The transmitters Tx from the individual traffic processing blocks TP are combined with their respective wavelength channel. A multiplexer MUX multiplexes the transmit channels at the output side. The control channel λc is extracted and added through an optical splitter and combiner in a drop and continue architecture as in figure 3, since each node must receive all control signals from the control channel λc.

In the preferred embodiments, control and traffic wavelength are transmitted over the same fiber. Usage of different fibers is possible but would be less efficient. The system can be applied to any fiber topology including ring, bus, tree , hub and spoke. For redundancy and reliability purpose the fiber as well as the equipment could be doubled ― e.g. in a two fiber ring in which the signals are propagating counterclockwise, such as in figure 1.

This above transmission scheme can be extended to a centralized approach in which all nodes are sending their requests to a central controller which does the calculation and provides the permissions to send. In this case, the protocol would be bi-directional and the traffic buffer size must be doubled to deal with the higher delay between calculation, permission, and transmission.

While the above embodiments use WDM transmission, the underlying concept can also be applied for TDM applications. In such case, the channel usage table has fixed time slot entries which are configurable.

The above described transmission method can be applied to advantage in a high capacity switching system such as the one described in pending EP application 09306284.2, which is incorporated by reference herein.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures., including any functional blocks labeled as "controller", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A method of data transmission between network interfaces (NIC1-NIC6) over a shared transmission medium (OR), comprising:
- providing one or more traffic channels λt) and at least one control channel (λc);
- synchronizing all network interfaces (NIC1-NIC2) to an absolute time reference (PTR1, PTR2);
- at a first network interface, scheduling a chunk of data for transmission;
- at the first network interface, determining the availability of a selected one of said traffic channels (λt) at a scheduled transmit time;
- announcing via the control channel (λc) information indicative of the scheduled transmit time and the selected traffic channel (λt); and
- at said scheduled transmit time, transmitting said chunk of data over the shared transmission medium (OR) using said selected traffic channel (λt).

2. A method according to claim 1, wherein the transmission medium (OR) has a ring structure and wherein a token is handed round the ring on the control channel (λc), and wherein each network interface (NIC1-NIC6) announces transmit time and channel of its data chunks when it receives the token.

3. A method according to claim 1, wherein a timing distribution protocol is run on the control channel (λc) to synchronize the network interfaces.

4. A method according to claim 1, wherein the traffic channels (λt) and the control channel (λc) are transmitted over the transmission medium (OR) using wavelength-division multiplexing.

5. A method according to claim 1, wherein all network interfaces (NIC1 ^-NIC6) monitor the control channel (λc) for announcements of other network interfaces and record scheduled transmit time and channel information announced by other network interfaces in a channel usage table.

6. A method according to claim 1, wherein said network interfaces (NIC1-NIC6) store delay values to other network interfaces and wherein transmissions are scheduled with a time difference larger than the delay to the respective destination network interface.

7. A method according to claim 1, wherein the transmission medium (OR) has a ring structure, wherein said network interfaces store a total delay of the ring, and wherein transmissions are scheduled with a time difference larger than the total ring delay.

8. A method according to claim 6 or 7, wherein said delay values are auto-discovered over the control channel (λc).

9. A network interface (NIC) for an optical transmission network with a shared transmission medium (OR), comprising:
- a controller (CTR) receiving and transmitting control signals over a control channel (λc);
- one or more traffic processing blocks (TP) receiving and transmitting traffic signals over one or more traffic channels (λt);
- an absolute time clock (A_CLK) to be synchronized to an absolute timing reference (PTR1, PTR2);
wherein said one or more traffic processing blocks (TP) comprise a chunk assembler (TxQ) assembling data signals for transmission into data chunks; wherein said controller (CTR) is adapted to schedule said data chunks for transmission by determining for each of said data chunks the availability of a selected one of said traffic channels (λt) at a scheduled transmit time; to announce via the control channel (λc) information indicative of the scheduled transmit time and the selected traffic channel; and to activate the respective traffic processing block (TP) at said scheduled transmit time to transmit the respective chunk of data over the shared transmission medium (OR).

10. A network interface according to claim 9, wherein said controller (CTR) is connected to a control channel receiver and transmitter pair, and wherein said controller (CTR) is adapted to announce via the control channel transmitter the scheduled transmit time and the selected traffic channel upon receipt of a token at the control channel receiver.

11. A network interface according to claim 9, wherein said controller (CTR) is adapted to synchronize absolute time clock (A_CLK) by running a timing distribution protocol on the control channel (λc).

12. A network interface according to claim 9, wherein said more traffic processing blocks (TP) comprise optical receiver and transmitter pairs, respectively adapted for different wavelength channels (λt) for wavelength division multiplex transmission.

13. A network interface according to claim 9, wherein said chunk assembler comprises a transmit queue (TxQ).

14. A network interface according to claim 9, comprising an optical coupling (OC) connecting to the transmission medium (OR), wherein said optical coupling has a drop and continue architecture comprising an optical splitter and an optical coupler.

15. A network interface according to claim 9, comprising an optical coupling (OC) connecting to the transmission medium (OR), wherein said optical coupling comprises optical switches (OX) for the individual traffic channels, wherein the optical switches are controlled by said controller (CTR)
